# EUROPEAN PATENT APPLICATION

(11) **EP 3 086 257 A1**
(43) Date of publication of application: **26.10.2016**
(21) Application number: 15305636.1
(22) Date of filing: 24.04.2015
(51) Int. Cl.: G06F 21/77, G06F 21/79

(54) **METHOD OF MANAGING A SECURE ELEMENT EMBEDDED IN A HOST DEVICE**

(71) Applicant: GEMALTO SA, 92190 Meudon (FR)
(72) Inventor: Bogusz, François, 13881 GEMENOS Cedex (FR); Li, Junyu, 13881 GEMENOS Cedex (FR); Roussel, Nicolas, 13881 GEMENOS Cedex (FR); Ioucha, Franck, 13881 GEMENOS Cedex (FR)
(74) Representative: Grevin, Emmanuel

(57) **Abstract**

The invention is a method for managing a secure element embedded in a host device. The secure element having a lifecycle wherein it is created then issued. The method comprises the steps where the secure element tracks data installed in the secure element and distinguishes data installed in pre-issuance or post-issuance, where the secure element manages a list identifying permanent data, and where the secure element receives a wipe command from the host device and checks the validity of credentials associated with the wipe command and in case of successful checking, it removes all data installed in the secure element after the secure element has been issued, except data identified by the list.

## Description

### (Field of the invention)

The present invention relates to methods of managing a secure element embedded in a host device. It relates particularly to methods of modifying the content of a secure element previously deployed on the field.

### (Background of the invention)

A secure element is either a tamper-resistant physical component able to store data and to provide services in a secure manner or a software component emulating such a component and providing a trusted storage area and trusted services. A secure element has an operating system configured to deny access to its resources to an entity which is not entitled. In general, a secure element has a limited amount of memory, a processor with limited capabilities and is devoid of battery. For instance a UICC (Universal Integrated Circuit Card) is a secure element which embeds SIM applications for telecommunication purposes. A secure element can be installed, fixedly or not, in a terminal, like a mobile phone for example. In some cases, the terminals are constituted by machines that communicate with other machines for M2M (Machine to Machine) applications.

A secure element can be in the format of a smart card, or may be in any other format such as for example but not limited to a packaged chip as described in PCT/SE2008/050380, or any other format.

It is known to solder or weld the secure element in a host device, in order to get it dependent of this host device. This is done in M2M (Machine to Machine) applications. The same objective is reached when a chip (a secure element) containing an application is contained in the host device. The chip is for example soldered to the mother-board of the host device or machine and constitutes an embedded-secure element (eSE).

A removable secure element uniquely associated with its hosting device may also be considered as an embedded-secure element.

According to the usual process, a secure element is personalized at factory stage. Then the secure element is deployed on the field and delivered to a final user. In most cases, the secure element is customized with data specific to the final user, like password, PIN, or credentials after the factory stage. These specific data may be sensitive. Additionally, application may be installed in the secure element by the user.

When a device hosting a secure element is sold or given to another user, there is a need to restore the secure element to a clean state.

### (Summary of the Invention)

An object of the invention is to solve the above mentioned technical problem.

An object of the present invention is a method for managing a secure element embedded in a host device. The secure element has a lifecycle wherein the secure element is created then issued. The method comprises the following steps:
- the secure element tracks data installed in the secure element and distinguishes data installed after the secure element has been issued from data installed before the secure element has been issued,
- the secure element manages a list identifying permanent data,
- the secure element receives a wipe command from the host device and checks the validity of credentials associated with the wipe command,
- in case of successful checking, the secure element removes all data installed in the secure element after the secure element has been issued, except data identified by the list.

Advantageously, the secure element may detect that a data is installed in the secure element after the secure element has been issued if the secure element has a state set to OP_SECURED according to GlobalPlatform Card Specification Version 2.2.1.

Advantageously, the credentials associated with the wipe command may be provided by a manufacturer of the host device.

Advantageously, the data may be one of the group comprising application package, application instance, applicative parameter, application objects, key set, secret data, certificate, secure element settings and executable code.

Advantageously, the list may be updated according to requirements of a manufacturer of the host device.

Another object of the invention is a secure element embedded in a host device. The secure element has a lifecycle wherein the secure element is created then issued. The secure element comprises:
- a tracking agent configured to tracks data installed in the secure element after the secure element has been issued,
- an admin agent configured to manage a list identifying permanent data,
- a checking agent configured to check the validity of credentials associated with a wipe command received from the host device,
- a wipe agent configured to remove all data installed in the secure element after the secure element has been issued, except data identified by the list, in case of successful checking of the credentials.

Advantageously, the tracking agent may detect that a data is installed in the secure element after the secure element has been issued if the secure element has a state set to OP_SECURED according to GlobalPlatform Card Specification Version 2.2.1.

Advantageously, the secure element may comprise both a package registry listing the applications package installed in the secure element and an application registry listing the application instances installed in the secure element and the tracking agent may track the package, respectively application, installation by updating a specific field in the package registry, respectively application registry.

Advantageously, the data may be one of the group comprising application package, application instance, applicative parameter, application objects, key set, secret data, certificate, secure element settings and executable code.

Advantageously, the admin agent may be adapted to update the list only if validly requested by a manufacturer of the host device.

### (Brief description of the drawings)

Other characteristics and advantages of the present invention will emerge more clearly from a reading of the following description of a number of preferred embodiments of the invention with reference to the corresponding accompanying drawing in which:

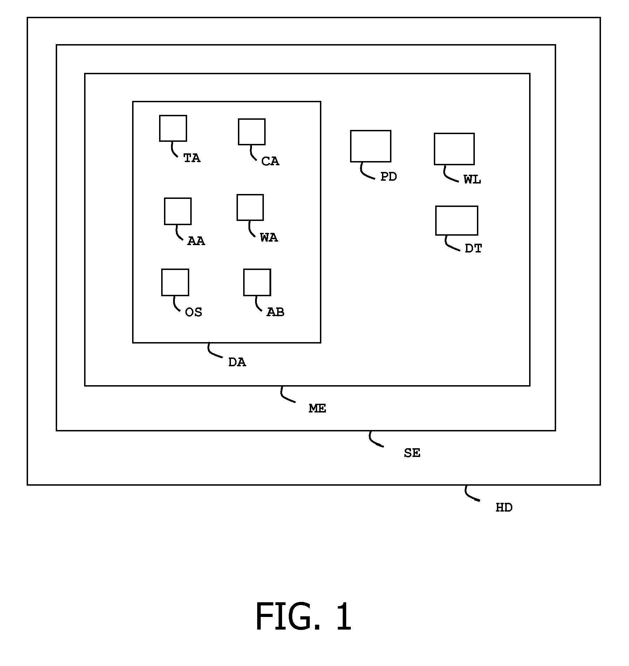

- Figure 1 is an example of a host device comprising a secure element according to the invention.

### (Detailed description of the preferred embodiments)

The invention may apply to any types of secure element intended to follow a lifecycle wherein the secure element is created during a pre-issuance phase then used in post-issuance phase. In particular, the invention is well-suited for secure elements intended to record data after the issuance step. The secure element may be coupled to any type of host machine able to establish a communication session with the secure element. For example the host machine may be a mobile phone, a tablet PC, an electronic pair of glasses, an electronic watch, an electronic bracelet, a vehicle, a meter, a slot machine, a TV or a computer.

**Figure 1** shows a host device HD embedding a secure element SE according to the invention.

In this example, the host device HD is a customary mobile phone having a hardware communication interfaces for communicating with the secure element SE.

The secure element SE is an embedded UICC (eUICC) which comprises a working memory of RAM type, a processing means, a non-volatile memory ME and a communication interface for exchanging data with the host device HD.

The non-volatile memory ME comprises a set of data DT which have been stored after the issuance of the secure element SE, permanent data PD which have been stored after the issuance of the secure element SE and a list WL (also named white-list) identifying the permanent data PD. For instance the permanent data PD may include a patch of the operating system, an application, or a key set. The permanent data PD are data which must be kept in the secure element SE even if the wipe command is performed. For instance, the essential certificates or administration keys which are mandatory to administrate the secure element SE can be classified as permanent data PD. Similarly, the security patches of the operating system can be set as permanent data PD.

The set of data DT may include several software applications. For example, assuming that the secure element has a virtual machine of JavaCard^{tm} type, the set of data DT may comprise downloaded application packages and their corresponding application instances.

The non-volatile memory ME also comprises a set of data DA which have been stored before the issuance of the secure element SE. The set of data DA comprises an operating system OS, applicative data AB, a tracking agent TA, an admin agent AA, a checking agent CA and wipe agent WA.

The applicative data AB may include a software application, a certificate or a key set which have been stored through the personalization process at factory stage.

The tracking agent TA is configured to tracks data which are installed in the secure element SE after the secure element SE has been issued. Advantageously, the tracking agent TA is also configured to tracks data which are installed in the secure element SE before the secure element SE has been issued.

In a preferred embodiment, the tracking agent TA is adapted to detect that a data is installed in the secure element SE after the secure element SE has been issued if the secure element SE has a state set to OP_SECURED according to GlobalPlatform Card Specification Version 2.2.1 when this data is recorded.

Usually, the secure element SE comprises a package registry listing the application packages installed in the secure element and an application registry listing the application instances installed in the secure element SE. Advantageously, the tracking agent TA can track the package, respectively application, installation by updating a specific field in the package registry, respectively application registry. This can be implemented through a simple flag.

The admin agent AA is configured to manage the list WL. In other word, the admin agent AA is adapted to update the content of the list WL.

In one example, the admin agent AA is configured to receive a specific command from the host device HD (or from a remote administration machine via the host device or from the manufacturer of the host device HD) aiming at updating the content of the list WL. This specific command may be initiated by the host device HD or by a remote machine which access the secure element SE via the host device HD. For instance, the remote machine may reach the secure element SE via an OTA (Over-The-Air) channel or via a combination of Wi-Fi and Internet. It could be done at any time before or after package download / applet installation.

In another example, the admin agent AA is configured to automatically update the list WL according to a piece of information associated with the recorded/deleted data. For instance, the piece of information may comprise an identifier (AID) of the package/application and a tag/indicator specifying if the package/application must be added in the list WL. This piece of information may be extracted from the downloaded package.

The checking agent CA is configured to check the validity of credentials associated with a wipe command received from the host device HD. For instance, a secret code (like a PIN) may be passed as input parameter of the wipe command. In another example, the checking agent CA may be adapted to check that the relevant credentials have been previously granted in the secure element SE. (for instance: a secure session has been previously established between the secure element SE and the host device HD or an Administration code have been successfully presented).

Preferably, the credentials associated with a wipe command are known and managed by the issuer (or the manufacturer) of the host device HD.

In one embodiment, the credentials associated with a wipe command may a combination of a secret provided by the host device HD (or the issuer/manufacturer of the host device HD) and a secret provided by the user of the host device HD.

The wipe command may be initiated by the host device HD and sent through a secure channel established with the secure element SE. In this case, the host device HD comprises a software component designed to send the wipe command.

Alternatively, the wipe command may be initiated by a remote machine (like a trusted administration server) and sent to the secure element SE via the host device HD used as a gateway.

The wipe agent WA is configured to remove all data installed in the secure element SE after the secure element SE has been issued, except data belonging to the list WL. The wipe command triggers the wipe agent WA which removes the data only in case of successful checking of the credentials.

In the example of Figure 1, the wipe agent WA will delete the set of data DT only.

It is to be noted that the tracking agent TA, the admin agent AA, the checking agent CA and the wipe agent WA may be implemented as independent components or as any combination merging this agents. In particular, the tracking agent TA can be implemented as a part of the operating system OS.

In one embodiment, the mechanism of the invention is designed as a couple made of an Admin applet and a Wipe service. The Wipe service is part of the operating system and can be accessed through a dedicated API. The activation of the Admin applet is controlled by a secret (e.g. PIN) provided by the host device maker. The Wipe API is export-restricted so that an unauthorized applet installed on the secure element cannot access the Wipe API. For instance, the security mechanism of GlobalPlatform 2.2 DAP mechanism can be used to restrict access to the Wipe API. The Admin applet is adapted to call the Wipe service.

When the Wipe operation has been triggered, the Wipe agent WA can parse the application registry and for each found application check if it has been instantiated in post-issuance and does not belong to the list WL. In case of successful checking operations, the Wipe agent WA can delete the application instance and loop back to the parsing of the application registry. The same process is performed for the package registry. In a Javacard© framework, once applets and applet packages have been processed, the Wipe agent WA can trigger a "requestObjectDeletion" to force the garbage collector to run and clean-up all non-referenced objects from the memory.

It is to be noted that, in case of error during the process of data deletion, the wipe agent WA may be configured to resume the deletion during the next start of the secure element SE. There is no need to manage an intermediate restoration point.

Advantageously, the checking agent CA may check preset conditions in addition to the verification of the credentials. For example, the checking agent CA may check that the number of received wipe commands is lower than a predefined threshold. In another example, the checking agent CA may check the validity of the secure element SE or the authenticity of the host device HD.

From the user perspective, all applications installed by the user (i.e. during post-issuance) will be deleted as well as all data related to these applications, except for applications marked as permanent data in the list WL.

Thanks to the exception managed through the list WL, the administrator of the secure element (e.g. Trusted Service Manager) will still be able to administrate the secure element, since the keys & certificates linked to Security Domains will remain unchanged and up-to-date.

Thanks to the invention, a large amount of data can be securely removed from the secure element in one operation. In particular, the invention may be used when a secure element is given to a new owner or when the ownership of the device hosting the secure element changes. The invention may also be used when the hosting device is sent to after-sales service if it needs repair, maintenance or repackaging.

It must be understood, within the scope of the invention that the above-described embodiments are provided as non-limitative examples. In particular, the secure element may comprise any number of data and the list WL may be implemented as a table, a file or any form able to identify a set of permanent data.

The architecture of the secure element SE shown at Figure 1 is provided as example only.

The secure element SE is not necessarily a eUICC and can be, for example, a smart card, a removable/welded hardware component, an embedded secure element or a microSD © token.

## Claims

1. A method for managing a secure element (SE) embedded in a host device (HD), said secure element (SE) having a lifecycle wherein said secure element (SE) is created then issued, **characterized in that** said method comprises the steps:
- the secure element (SE) tracks data installed in the secure element (SE) and distinguishes data (DT) installed after the secure element (SE) has been issued from data installed before the secure element (SE) has been issued,
- the secure element (SE) manages a list (WL) identifying permanent data (PD),
- the secure element (SE) receives a wipe command from the host device (HD) and checks the validity of credentials associated with the wipe command,
- in case of successful checking, the secure element (SE) removes all data installed in the secure element (SE) after the secure element (SE) has been issued, except data identified by the list (WL).

2. A method according to claim 1, wherein the secure element (SE) detect a data is installed in the secure element (SE) after the secure element (SE) has been issued if the secure element (SE) has a state set to OP_SECURED according to GlobalPlatform Card Specification Version 2.2.1.

3. A method according to claim 1, wherein the credentials associated with the wipe command is provided by a manufacturer of the host device (HD).

4. A method according to claim 1, wherein the data (DT) is one of the group comprising application package, application instance, applicative parameter, application objects, key set, secret data, certificate, secure element settings and executable code.

5. A method according to claim 1, wherein the list (WL) is updated according to requirements of a manufacturer of the host device (HD).

6. A secure element (SE) embedded in a host device (HD), said secure element (SE) having a lifecycle wherein said secure element (SE) is created then issued, **characterized in that** said secure element (SE) comprises:
- a tracking agent (TA) configured to tracks data (DT) installed in the secure element (SE) after the secure element (SE) has been issued,
- an admin agent (AA) configured to manage a list (WL) identifying permanent data (PD),
- a checking agent (CA) configured to check the validity of credentials associated with a wipe command received from the host device (HD),
- a wipe agent (WA) configured to remove all data installed in the secure element (SE) after the secure element (SE) has been issued, except data identified by the list (WL), in case of successful checking of the credentials.

7. A secure element according to claim 6, wherein the tracking agent (TA) detects that a data is installed in the secure element (SE) after the secure element (SE) has been issued if the secure element (SE) has a state set to OP_SECURED according to GlobalPlatform Card Specification Version 2.2.1.

8. A secure element according to claim 6, wherein the secure element (SE) comprises both a package registry listing the applications package installed in the secure element (SE) and an application registry listing the application instances installed in the secure element (SE) and wherein the tracking agent (TA) tracks the package, respectively application, installation by updating a specific field in the package registry, respectively application registry.

9. A secure element according to claim 6, wherein the data (DT) is one of the group comprising application package, application instance, applicative parameter, application objects, key set, secret data, certificate, secure element settings and executable code.

10. A secure element according to claim 6, wherein the admin agent (AA) is adapted to update the list (WL) only if validly requested by a manufacturer of the host device (HD).
